# EUROPÄISCHE PATENTANMELDUNG

(11) **EP 1 034 970 A2**
(43) Veröffentlichungstag der Anmeldung: **13.09.2000**
(21) Anmeldenummer: 00102606.1
(22) Anmeldetag: 08.02.2000
(51) Int. Cl.: B60N 2/06, B60N 2/02

(54) **Verstellvorrichtung für einen längsverstellbaren Fahrzeugsitz**

(30) Priorität: 08.03.1999 DE 19910080
(71) Anmelder: DaimlerChrysler AG, 70567 Stuttgart (DE)
(72) Erfinder: Schmidt, Bernd, 72218 Wildberg (DE); Schrom, Ralf-Henning, 72108 Rottenburg (DE); Shephard, Philip C., Birmingham B28 OQR (GB); Velimvassakis, Petros, 76227 Karlsruhe (DE)

(57) **Zusammenfassung**

Die Erfindung bezieht sich auf eine Verstellvorrichtung für einen längsverstellbaren Fahrzeugsitz mit beidseitig jeweils vorne und hinten an einem Sitzuntergestell gelagerten Lenkerhebeln zur Höheneinstellung des Sitzes, mit denen ein Sitzrahmen am Sitzuntergestell angelenkt ist, wobei korrespondierende Hebelarme der vorderen und hinteren Lenkerhebel jeweils über eine Koppelschwinge miteinander verbunden sind.

Erfindungsgemäß umfaßt jede der Koppelschwingen zwei gelenkig miteinander verbundene Koppelarme, deren Zwischengelenk verschiebebeweglich an dem Sitzuntergestell abgestützt ist.

## Beschreibung

Die Erfindung betrifft eine Verstellvorrichtung für einen längsverstellbaren Fahrzeugsitz nach dem Oberbegriff des Patentanspruchs 1.

Bei einer solchen, der US 2 919 744 entnehmbaren Verstellvorrichtung sind zur Höheneinstellung des Fahrzeugsitzes beidseitig jeweils vorne und hinten an längsverstellbaren Tragschienen gelagerte Lenkerhebel vorgesehen, mit denen ein Sitzrahmen am Sitzuntergestell angelenkt ist. Die korrespondierenden Hebelarme der vorderen und hinteren Lenkerhebel sind jeweils über Koppelschwingen miteinander verbunden, wobei jede der Koppelschwingen zwei gelenkig miteinander verbundene Koppelarme umfaßt. Die Zwischengelenke der insgesamt vier Koppelschwingen sind dabei verschiebebeweglich an karosseriefesten Führungsschienen abgestürzt. Zur Höhen- und Längsverstellung ist eine Antriebseinrichrung mit einem am Fahrzeugboden befestigten Antrieb vorgesehen, mit dem jeweils in der entsprechenden Führungsschiene verlaufende Antriebsspindeln über zugeordnete Antriebskabel synchron betreibbar sind. Mittels der beiden Spindeln sind jeweils die beiden an der gemeinsamen Führungsschiene verschiebegeführten Zwischengelenke entlang von Führungsschlitzen in den Führungsschienen längsverstellbar, indem die Zwischengelenke mit einer zugeordneten, mit der Spindel in Eingriff stehenden Spindelmutter verbunden sind. Die Längsverstellung des Sitzes erfolgt ebenfalls über die beiden Spindeln, indem jeweils eine diesen zugeordnete weitere Spindelmutter über eine Konsole mit den längsverstellbaren Tragschienen verbunden ist. Damit bei der Höhenverstellung nicht zwangsweise eine Längsverstellung des Sitzes erfolgt, sind die Spindelmuttern von den zugeordneten Konsolen entkoppelbar.

Nachteilig hierbei ist es u.a., daß die Höhenverstellvorrichtung über eine gemeinsame Antriebseinrichtung mit der karosserieseitig angeordneten Längsversteilvorrichtung des Sitzes betrieben wird. Dies bedingt eine Versteilvorrichtung mit hohem Platz-, Bau-, und Wartungsaufwand.

Die EP 0 238 234 A1 zeigt eine Verstellvorrichtung zur Höheneinstellung des Sitzes mit beidseitig jeweils vorne und hinten am Sitzuntergestell gelagerten Lenkerhebeln, die als Verbindung zwischen den korrespondierenden Hebelarmen der vorderen und hinteren Lenkerhebel jeweils eine Koppelschwinge aufweisen. Zur Koppelung der vier Lenkerhebel ist das vordere Lenkerhebelpaar drehfest mit einer manuell antreibbaren Verbindungsstange verbunden. Dabei benötigen die Koppelschwingen während ihrer Bewegung bei der Höhenverstellung des Fahrzeugsitzes sehr viel Bauraum, insbesondere im Komfortbereich des Sitzkissens. Um einen ausreichenden Sitzkomfort für den Insassen zu gewährleisten, muß das Sitzkissenteil relativ dick ausgebildet oder gegenüber dem Sitzrahmen erhöht angeordnet werden.

Aufgabe der Erfindung ist es, eine Verstellvorrichtung nach dem Oberbegriff des Patentanspruchs 1 mit einem geringeren Platzbedarf sowie Wartungs- und Bauaufwand zu schaffen.

Diese Aufgabe wird erfindungsgemäß durch eine Verstellvorrichtung mit den Merkmalen des Patentanspruchs 1 gelöst. Vorteilhafte Ausführungsformen mit zweckmäßigen Weiterbildungen der Erfindung sind in den Unteransprüchen angegeben.

Bei der Verstellvorrichtung nach der Erfindung umfaßt jede der Koppelschwingen zwei gelenkig miteinander verbundene Koppelarme, deren Zwischengelenk am längsverstellbaren Sitzuntergestell verschiebegeführt abgestützt ist. Der vom Antrieb zur Längsverstellung unabhängige Antrieb zur Höhenverstellung wird mit dem längsverstellbaren Sitzuntergestell mitbewegt und an diesem befestigt, was eine insgesamt einfache Antriebsweise der Verstellvorrichtung ermöglicht. Zur einfachen und weitestgehend wartungsfreien Kopplung der vier Lenkerhebel ist das vordere oder hintere angetriebene Paar der Lenkerhebel drehfest an einer Querstange angeordnet.

Mit dieser Anordnung der im Mittelbereich abgesenkten Koppelschwinge ergibt sich sowohl eine Vergrößerung des Komfortbereichs des Sitzkissens als auch eine verbesserte Abstützung des Sitzrahmens am Sitzuntergestell. Insbesondere können die bei der Höhenverstellung oder bei einem Unfall auf die Koppelschwingen wirkenden Biegemomente einerseits durch die Abstützung der Zwischengelenke am Sitzuntergestell und andererseits durch die zweiteilige Ausbildung der Koppelschwinge mit den beiden Koppelarmen auf verbesserte Weise aufgenommen werden. Die Zwischengelenke können dabei während ihrer Verschiebebewegung sowohl eine lineare als auch eine kreisbogenförmige Bahn durchlaufen.

Ein jeweils zwischen dem vorderen Lenkerhebel und dem Sitzrahmen angelenkter Ausgleichslenker dient insbesondere zur Aufnahme von auf den Sitztahmen z.B. durch Vibrationen oder bei der Höhenverstellung einwirkender Kräfte.

Weiter hat es sich als vorteilhaft gezeigt, die vorderen und hinteren Lenkerhebel jeweils an der zugeordneten, längsverstellbaren Tragschiene des Sitzuntergestells verschwenkbar zu lagern und das entsprechende Zwischengelenk an der Tragschiene abzustützen, wodurch sich eine besonders gute Abstützung des Sitzrahmens am Sitzuntergestell und eine insgesamt Bauraum sparende Verstellvorrichtung ergibt.

Insbesondere bei einem Integralsitz hat es Vorteile, wenn die Zwischengelenke in jeder längseingestellten Position des Fahrzeugsitzes im Überdeckungsbereich mit den fahrzeugfesten Führungsschienen abgestützt sind. Dadurch können hohe Kräfte, wie sie beispielsweise durch eine Gurtzugkraft bei einem Unfall auf einen Integralsitz wirken, von der Verstellvorrichtung über die Tragschienen in die Führungsschienen und damit in den Fahrzeugboden eingeleitet werden.

Schließlich hat es sich als vorteilhaft erwiesen, zur Unterstützung der Hubbewegung des Sitzrahmens seitlich angeordnete Entlastungsfedern vorzusehen, um dadurch den Getriebemotor zu entlasten oder entsprechend kleiner dimensionieren zu können.

Weitere Vorteile Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine Perspektivansicht auf ein Sitzuntergestell eines Fahrzeugsitzes mit der Verstellvorrichtung nach einer bevorzugten Ausführungsform der Erfindung;
- Fig. 2: eine Seitenansicht auf das Sitzuntergestell und einem über die erfindungsgemäße Verstellvorrichtung angelenkten Sitzrahmen;
- Fig. 3: eine schematische Seitenansicht des Fahrzeugsitzes mit einem Sitzkissenteil und einem Rückenlehnenteil, dessen Sitzrahmen über die erfindungsgemäße Verstellvorrichtung höhenverstellbar am Sitzuntergestell angelenkt ist.

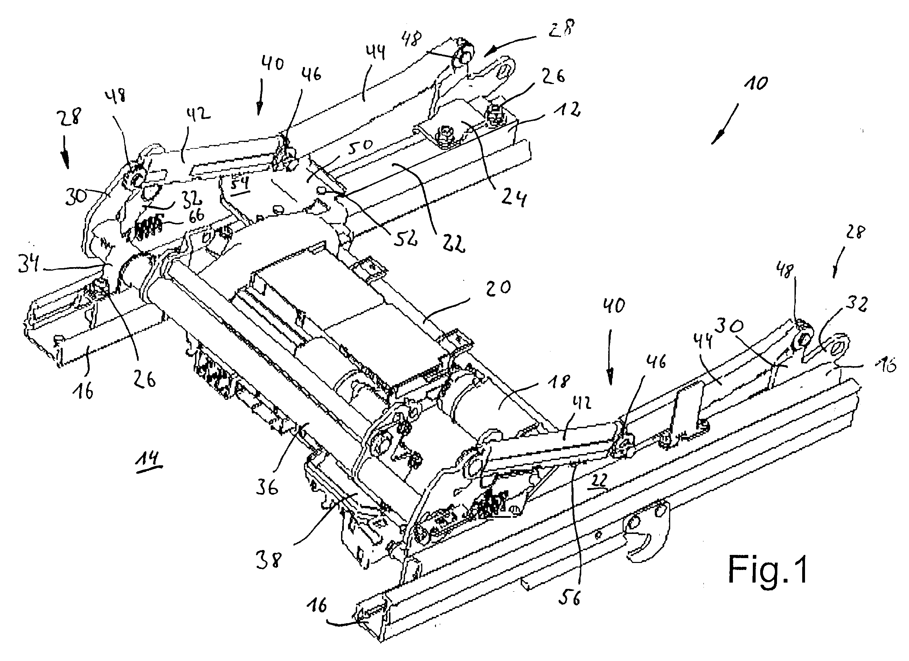

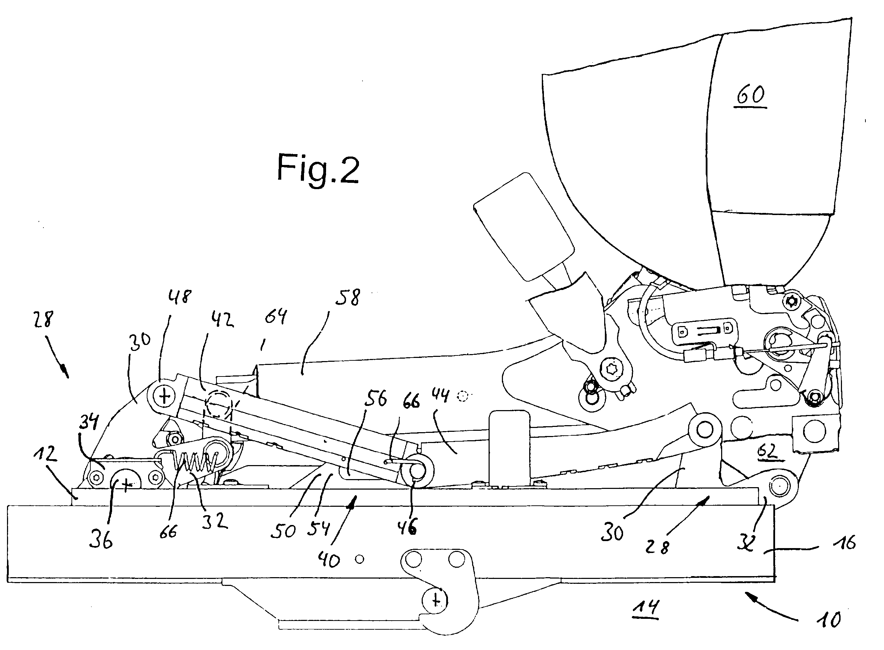

In den Fig.1 und 2 ist in Perspektiv- bzw. in Seitenansicht ein Sitzuntergestell 10 eines Fahrzeugsitzes gezeigt, dessen Tragschienen 12 zur Längsverstellung des Fahrzeugsitzes in zwei parallel zueinander verlaufenden, am Fahrzeugboden 14 befestigten Führungsschienen 16 längsverstell- und arretierbar geführt sind. Hierzu ist zwischen den Tragschienen 12 eine über einen Getriebemotor 18 anzutreibende und zu sperrende Welle 20 vorgesehen, die an den Tragschienen 12 gelagert ist und an deren Enden nicht sichtbare Zahnräder befestigt sind, die mit an den Führungsschienen 16 befestigten, nicht sichtbaren Zahnstangen in Eingriff stehen.

Im hinteren Bereich der Tragschienen 12 ist an deren Oberseite 22 jeweils ein hinterer Lagerbock 24 mittels zweier Schraubverbindungen 26 befestigt. An den hinteren Lagerböcken 24 ist jeweils ein Lenkerhebel 28 verschwenkbar gelagert, der etwa V-förmig mit jeweils einem vorderen und einem hinteren Hebelarm 30,32 ausgebildet ist. Im vorderen Bereich jeder Tragschiene 12 ist an deren Oberseite 22 ein vorderer Lagerbock 34 mit Hilfe von jeweils zwei Schraubverbindungen 26 festgelegt. In den vorderen Lagerböcken 34 ist eine Querstange 36 drehbar aufgenommen, an deren Enden zwei Lenkerhebel 28 befestigt sind, die im wesentlichen gleich den hinteren, bereits beschriebenen Lenkerhebel 28 gestaltet sind. Die Querstange 36 ist durch einen Getriebemotor 38 zur Höheneinstellung zu verdrehen und zu sperren, der an der von vorne gesehen rechten Tragschiene 12 be festigt ist.

Die jeweils vorderen Hebelarme 30 der einander seitlich zugeordneten vorderen und hinteren V-förmigen Lenkerhebel 28 sind über jeweils eine Koppelschwinge 40 miteinander verbunden. Die Koppelschwinge 40 umfaßt zwei durch ein Zwischengelenk 46 gelenkig miteinander verbundene Koppelarme 42,44, wobei der vordere Koppelarm 42 an dem jeweils vorderen Lenkerhebel 28 und der hintere Koppelarm 44 an dem jeweils hinteren Lenkerhebel 28 an Lenkergelenken 48 angelenkt ist. Die Koppelarme 42,44 sind etwa gleich lang und weisen hier ein besonders biegesteifes, annähernd geschlossenes und im Querschnitt etwa rechteckiges Profil auf, das im Bereich der Zwischengelenke 46 und der Lenkergelenke 48 verstärkt ausgebildet ist. Durch zwei annähernd gleich lange Koppelarme 42,44 ergibt sich ein besonders großer Komfortbereich des Sitzkissens oberhalb der Koppelschwingen 40; gleichfalls wäre jedoch auch der Gebrauch unterschiedlich langer Koppelarme 42,44 denkbar. Etwa mittig der beiden Tragschienen 12 ist an deren Oberseite 22 jeweils eine im wesentlichen winkelförmige Gelenkführung 50 mittels zweier Schraubverbindungen 52 befestigt. In den jeweils etwa senkrecht stehenden Schenkel 54 der beiden Gelenkführungen 50 ist ein in Längsrichtung parallel zur Tragschiene 12 und etwa waagerecht verlaufendes Langloch 56 vorgesehen, in dem das Zwischengelenk 46 linear verschiebegeführt und die Koppelschwinge 40 an der zugeordneten Tragschiene 12 des Sitzuntergestells 10 abgestützt ist.

Wie insbesondere in Fig.2 zu erkennen ist, umfaßt der Fahrzeugsitz einen Sitzrahmen 58, an dem ein nicht dargestelltes Sitzkissenteil sowie ein Rückenlehnenteil 60 angeordnet ist. Die hinteren Lenkerhebel 28 sind über deren hintere Hebelarme 32 gelenkig mit nach unten abstehenden, dreieckigen Aufnahmen 62 des Sitzrahmens 58 verbunden. Die vorderen Lenkerhebel 28 sind mit deren hinteren Hebelarmen 32 über jeweils einen Ausgleichslenker 64 mit dem vorderen Ende des Sitzrahmens 58 verbunden. Der Ausgleichslenker 64 dient dabei insbesondere zum Ausgleichen von auf den Sitzrahmen 58 einwirkenden Kräften.

Der Fahrzeugsitz ist in Fig.2 in seiner annähernd tiefsten Position dargestellt, wobei das Zwischengelenk 46 etwa in seiner hintersten Stellung in dem Langloch 56 der Gelenkführung 50 liegt. Zum Verstellen des Fahrzeugsitzes in eine höhere Position wird die durch den Getriebemotor 38 angetriebene und zu sperrende Querstange 36 entsprechend in Richtung gegen den Uhrzeigersinn gedreht, wodurch die mit der Querstange 36 fest verbundenen vorderen Lenkerhebel 28 und über die Koppelschwinge 40 auch die hinteren Lenkerhebel 28 in Richtung gegen den Uhrzeigersinn verschwenkt werden. Mit anderen Worten wird durch die Koppelschwinge 40 eine Koppelung der Schwenkbewegung der vorderen und der hinteren Lenkerhebel 28 geschaffen, wodurch der Sitzrahmen vorne und hinten gleichermaßen gegenüber dem Sitzuntergestell 10 nach oben oder unten bewegt wird. In der schließlich eingestellten Höhenlage ist der Sitzrahmen 58 bzw. das Sitzkissenteil und das Rückenlehnenteil 60 durch den dann gesperrten Getriebemotor 38 festgelegt.

Zur Unterstützung der Hubbewegung des Sitzrahmens 58 ist seitlich zwischen den Zwischengelenken 46 und den vorderen Lagerböcken 34 jeweils eine Schraubenfeder 66 angeordnet, die in der unteren Position des Sitzrahmens 58 und der damit verbundenen Stellung des Zwischengelenks 46 im hinteren Bereich des Langlochs 56 vorgespannt ist. Die Schraubenfeder 66 ist sowohl in Fig.1 als auch in Fig.2 nur ausschnittweise im Bereich ihrer Enden dargestellt. Beim Hochfahren des Sitzrahmens 58 unterstützen die Schraubenfedern 66 das Zwischengelenk 46 und damit die gesamte Verstellvorrichtung federspeicherartig in dessen Bewegung innerhalb des Langloches 56 in Richtung nach vorne.

Fig.2 ist zudem entnehmbar, daß das Zwischengelenk 46 unabhängig von der eingestellten Höhe des Sitzrahmens 58 tiefer liegt als die Lenkergelenke 48 zwischen den Koppelarmen 42,44 und den Ausgleichslenkern 64 bzw. dem Sitzrahmen 58. Durch diese V-förmige Anordnung der Koppelschwingen 40 ergibt sich insbesondere mittig des Sitzkissens eine Vergrößerung von dessen Komfortbereich.

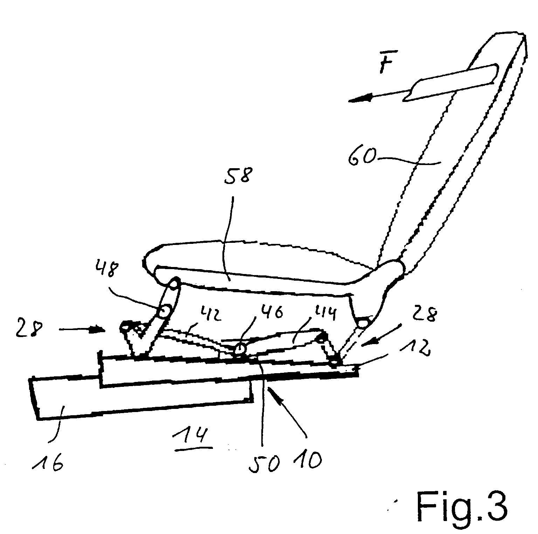

In Fig.3 ist in schematischer Seitenansicht der Fahrzeugsitz mit dem Sitzkissenteil und dem Rückenlehnenteil 60 dargestellt, dessen Sitzrahmen 58 über die Verstellvorrichtung höhenverstellbar am Sitzuntergestell 10 angelenkt ist. Die Tragschienen 12 können vorzugsweise soweit nach vorne oder nach hinten längsverstellt werden, daß die Zwischengelenke 46 in jeder längseingestellten Position im Überdeckungsbereich mit den Führungsschienen 16 liegen, so daß die Koppelschwingen 40 über die zugeordneten Zwischengelenke 46 in günstiger Weise am Sitzuntergestell 10 abgestützt sind.

Der hier dargestellte Fahrzeugsitz ist als Integralsitz ausgebildet, wobei die im oberen Bereich des Rückenlehnenteils 60 angreifende Kraft F eine Gurtzugkraft z.B. bei einem Unfall symbolisiert. Aus dieser Gurtzugkraft resultierend werden die vorderen Lenkergelenke 48 zwischen den vorderen Lenkerhebeln 28 und dem Sitzrahmen 58 insbesondere mit einer Druckkraft von oben und die Lenkergelenke 48 zwischen den hinteren Lenkerhebeln 28 und dem Sitzrahmen 58 insbesondere mit einer Zugkraft von oben beaufschlagt. Über die jeweils vorderen und hinteren Lenkerhebel 28 wird somit jeweils eine Druckkraft auf die Koppelarme 42,44 übertragen, wobei durch das Zwischengelenk 46 die an der Koppelschwinge 40 auftretenden Biegemomente verringert werden und durch die relativ kurzen Koppelarme 42,44 große Kräfte aufgenommen werden können. Durch die Abstützung des Sitzrahmens 58 an zwei weiteren Stellen im Bereich der Gelenkführung 50 ergibt sich eine Verstellvorrichtung, die die auftretenden Kräfte besonders gut an das Sitzuntergestell 10 verteilt und in den Fahrzeugboden 14 einleitet.

## Patentansprüche

1. Verstellvorrichtung für einen längsverstellbaren Fahrzeugsitz mit beidseitig jeweils vorne und hinten an einem Sitzuntergestell (10) gelagerten Lenkerhebeln (28) zur Höheneinstellung des Fahrzeugsitzes, mit denen ein Sitzrahmen (58) am Sitzuntergestell (10) angelenkt ist, wobei korrespondierende Hebelarme (30) der vorderen und hinteren Lenkerhebel (28) jeweils über eine Koppelschwinge (40) miteinander verbunden sind, wobei jede der Koppelschwingen (40) zwei gelenkig miteinander verbundene Koppelarme (42,44) umfaßt, deren Zwischengelenk (46) verschiebebeweglich an dem Sitzuntergestell (10) abgestützt ist, und wobei alle Lenkerhebel (28) mittels einer Antriebseinrichtung schwenkbeweglich antreibbar sind,
**dadurch gekennzeichnet,**
dass die Zwischengelenke (46) jeweils am längsverstellbaren Sitzuntergestell (10) verschiebegeführt sind, dass die Antriebseinrichtung zur Kopplung der Lenkerhebel (28) eine Querstange (36) umfaßt, an der ein zugeordnetes Paar der Lenkerhebel (28) drehfest angeordnet ist, und dass der Antriebseinrichrung ein Antrieb (38) zugeordnet ist, der am längsverstellbaren Sitzuntergestell (10) befestigt ist.

2. Verstellvorrichtung nach Anspruch 1,
**dadurch gekennzeichnet,**
dass die vorderen und hinteren Lenkerhebel (28) auf einer Sitzseite jeweils an einer längsverstellbaren Tragschiene (12) des Sitzuntergestells (10) drehgelagert sind, wobei die Zwischengelenke (46) der Koppelschwingen (40) jeweils an der ihnen zugeordneten Tragschiene (12) abgestützt sind.

3. Verstellvorrichtung nach Anspruch 1,
**dadurch gekennzeichnet,**
dass die Zwischengelenke (46) in jeweils einer an längsverstellbaren Tragschienen (12) des Sitzuntergestells (10) befestigten Gelenkführung (50) linear verschiebegeführt sind, wobei die Tragschienen (12) in zugeordneten, am Fahrzeugboden befestigten Führungsschienen (16) laufen.

4. Verstellvorrichtung nach Anspruch 1,
**dadurch gekennzeichnet,**
dass das Zwischengelenk (46) bei jeder Sitzeinstellung tiefer als die ihm abgewandten Hebelgelenke (48) der Koppelarme (42,44) angeordnet ist.

5. Verstellvorrichtung nach Anspruch 1,
**dadurch gekennzeichnet,**
dass die beiden Koppelarme (42,44) der Koppelschwinge (40) etwa gleich lang sind.

6. Verstellvorrichtung nach Anspruch 1,
**dadurch gekennzeichnet,**
dass die vorderen Lenkerhebel (28) über jeweils einen Ausgleichslenker (64) mit dem Sitzrahmen (58) verbunden sind.

7. Verstellvorrichtung nach Anspruch 1,
**dadurch gekennzeichnet,**
dass die Zwischengelenke (46) in jeder längseingestellten Position des Fahrzeugsitzes im Überdeckungsbereich mit den fahrzeugfesten Führungsschienen (16) abgestützt sind.

8. Verstellvorrichtung nach Anspruch 1,
**dadurch gekennzeichnet,**
dass zur Unterstützung der Hubbewegung des Sitzrahmens (58) seitlich angeordnete Entlastungsfedern (66) vorgesehen sind.

9. Verstellvorrichtung nach Anspruch 1,
**dadurch gekennzeichnet,**
dass die Entlastungsfedern (66) mit einem Ende an den Zwischengelenken (46) angeordnet sind.
